# EUROPÄISCHE PATENTSCHRIFT

(11) **EP 1 931 533 B1**
(45) Veröffentlichungstag und Bekanntmachung des Hinweises auf die Patenterteilung: **09.09.2009**
(21) Anmeldenummer: 06762475.9
(22) Anmeldetag: 07.07.2006
(51) Int. Cl.: B60N 2/225

(54) **VERSTELLBESCHLAG**
ADJUSTMENT FITTING
FERRURE DE REGLAGE

(30) Priorität: 09.09.2005 DE 202005014192 U
(43) Veröffentlichungstag der Anmeldung: 18.06.2008
(73) Patentinhaber: Brose Fahrzeugteile GmbH & Co. KG, 96450 Coburg (DE)
(72) Erfinder: BREHM, Horst, 96120 Bischberg (DE); SCHECK, Georg, 96479 Weitramsdorf (DE); LÖHNERT, Heiko, 96484 Grosswalbur (DE); THEIL, Andreas, 96484 Meeder (DE)
(74) Vertreter: Tergau & Pohl Patentanwälte
(86) Internationale Anmeldenummer: PCT/EP2006/006639
(87) Internationale Veröffentlichungsnummer: WO 2007/031134

(56) Entgegenhaltungen:
- DE-A1- 2 921 588
- DE-A1- 10 033 666
- DE-A1- 10 328 300
- DE-A1- 19 527 374
- US-A- 4 025 109

## Beschreibung

Die Erfindung betrifft einen Verstellbeschlag, insbesondere für einen Fahrzeugsitz, mit einem ersten Beschlagteil und einem zweiten Beschlagteil, die über ein Taumelgetriebe drehverstellbar miteinander verbunden sind, gemäß dem Oberbegriff des Anspruchs 1.

Ein Verstellbeschlag der eingangs genannten Art wird insbesondere zum Verstellen der Rückenlehne eines Fahrzeugsitzes eingesetzt. Hierzu wird beispielsweise der erste Beschlagteil mit der Rückenlehne und der zweite Beschlagteil mit der Sitzfläche des Fahrzeugsitzes verbunden. Der Einsatz eines Taumelgetriebes hat sich an dieser Stelle bewährt, da es eine mit vergleichsweise wenigen Elementen auskommende, gleichzeitig ein Getriebe umfassende Drehverbindung darstellt.

Ein derartiger eingangs beschriebener Verstellbeschlag ist beispielsweise aus der DE 29 21 588 A1 bekannt. Dieses Dokument enthält die Merkmale des Oberbegriffs des Anspruchs 1. Das Taumelgetriebe umfasst dabei ein um eine Zentralachse drehbares Zentralrad und ein zur Zentralachse exzentrisch im Inneren des Zentralrads angeordnetes Umlaufrad. Dabei bilden das Zentralrad und das Umlaufrad zueinander einen exzentrischen Aufnahmeraum, in dem ein erster und ein zweiter Exzenter gegeneinander verdrehbar angeordnet sind, wodurch eine variable Exzentrizität gebildet ist. Zur Betätigung des Taumelgetriebes ist als Übertragungselement eine mittels einer Verstellachse drehbare Mitnehmerscheibe vorgesehen. Die Mitnehmerscheibe weist Aussparungen auf, die mit auf den Exzentern angeordneten Mitnehmerstiften in Eingriff steht. Weiter ist ein mechanisch wirkendes Kopplungselement (Feder) vorgesehen, welches im Ruhezustand des Verstellbeschlags die Exzenter so gegeneinander dreht, dass sich ihre Gesamtexzentrizität vergrößert. Hierdurch wird das Umlaufrad in eine Position gebracht, in welcher es spielfrei in das Zentralrad eingreift. Bei einer Verdrehung der Mitnehmerscheibe wird über den Mitnehmerstift jeweils ein Exzenter verdreht, wodurch sich die Gesamtexzentrizität verkleinert. Hierdurch wird das Umlaufrad in eine Position gebracht, in welcher es mit Spiel in das Zentralrad eingreift. Das Umlaufrad kann taumelnd mit umlaufender Exzentrizität über die Mitnehmerscheibe gegenüber dem Zentralrad verdreht werden. Hierdurch verdreht sich mit entsprechender Übersetzung, die durch das Verhältnis der Zahnanzahl der Außenverzahnung des Umlaufrades zu der Zahnanzahl der Innenverzahnung des Zentralrades bestimmt ist, der erste Beschlagteil relativ zu dem zweiten Beschlagteil.

Der aus der DE 29 21 588 A1 bekannte Verstellbeschlag ist in seiner Ruhestellung spielfrei, wodurch ein Klappern vermieden ist. Nachteiligerweise ist dieser Verstellbeschlag jedoch relativ schwergängig und weist eine Betätigungsasymetrie bezüglich der Drehrichtung auf.

Weitere ein Taumelgetriebe aufweisende Verstellbeschläge, bei welchen das Umlaufrad in einer Ruhestellung dem Zentralrad spielfrei aufliegt, sind aus der DE 195 27 374 C2 und der DE 103 28 300 A1 bekannt.

Aufgabe der Erfindung ist es, einen Verstellbeschlag mit einem Taumelgetriebe anzugeben, der möglichst leichtgängig und in seiner Ruheposition spielfrei ist. Diese Aufgabe wird für einen Verstellbeschlag gemäß dem Oberbegriff des Anspruchs 1 erfindungsgemäß dadurch gelöst, dass das Übertragungselement zusätzlich in der Ebene der Beschlagteile beweglich gelagert ist, wobei sich das Eingriffsmittel im Wesentlichen in dieser Ebene erstreckt und bei Betätigung auf beide Mitnahmemittel entgegen dem Kopplungselement wirkt, wodurch die Exzenter in eine Position mit verringerter Gesamtexzentrizität bringbar sind, in welcher das Umlaufrad mit Spiel in das Zentralrad eingreift.

Die Erfindung geht dabei von der Überlegung aus, dass zur Ausbildung einer variablen Exzentrizität in dem exzentrischen Aufnahmeraum ein innerer und ein äußerer Exzenter angeordnet sind. Zu einer Verringerung der von beiden Exzentern gebildeten Gesamtexzentrizität muss eine Relativdrehung beider Exzenter zueinander erfolgen. Da sich der innere Exzenter und der äußere Exzenter abgesehen von ihrer Form insbesondere durch ihre Anordnung im Verstellbeschlag unterscheiden, resultiert eine Asymmetrie im Bewegungsablauf, falls der innere gegenüber dem äußeren Exzenter oder aber der äußere gegenüber dem inneren Exzenter verdreht wird.

Die Erfindung erkennt in einem weiteren Schritt, dass diese Asymmetrie im Bewegungsablauf beseitigt werden kann, wenn beide Exzenter unabhängig von der Bewegungsrichtung gegeneinander bewegt werden. Dies erfolgt dadurch, dass das Übertragungselement in der Ebene der Beschlagteile beweglich gelagert ist und dass sich das Eingriffsmittel im Wesentlichen in dieser Ebene erstreckt. Durch eine derartige Ausgestaltung bewirkt eine Verdrehung des Übertragungselements in der Ebene der Beschlagteile eine Verschiebung und somit insgesamt eine Verschwenkung des Eingriffsmittels, die zu einer Betätigung eines Exzenters entgegen der Drehrichtung verwendet werden kann. Die in der Ebene bewegliche Lagerung kann durch ein Schiebelager mit mehreren Freiheitsgraden in der Ebene ausgebildet werden. Auch kann das Eingriffsmittel beispielsweise in einer vorgegebenen Längsrichtung oder entlang einer Kulisse verschiebbar sein.

In einer ersten vorteilhaften Ausgestaltung der Erfindung ist das Eingriffsmittel als ein sich radial erstreckender Zeiger ausgebildet und das Mitnahmemittel der Exzenter jeweils durch zwei jeweils auf einer Seite des Zeigers angeordnete Strukturen gebildet. Wird das Übertragungsmittel gedreht, so stützt sich der radial erstreckende Zeiger zunächst an einer in Drehrichtung liegenden Struktur ab, um dann aufgrund der Längsverschiebbarkeit gegen eine gegenüberliegende Struktur verkippt zu werden. Diese bei Betätigung verkippte Position des Zeigers führt gegenüber einer Ruheposition zu einem Auseinanderbewegen der Strukturen, wodurch die Exzenter gegeneinander verdreht werden. In der Ruheposition werden die Exzenter aufgrund des Kopplungselementes wieder in die Position mit vergrößerter Gesamtexzentrizität zurückgezogen.

Zweckmäßigerweise weisen die Exzenter jeweils einen sich radial über den Umfang hinaus erstreckenden Arm auf, auf welchem jeweils das Mitnahmemittel angeordnet ist. Hierdurch wird der verfügbare Hebelarm zum Gegeneinanderverdrehen der beiden Exzenter verlängert. Dies ermöglicht eine größere Flexibilität bei der Anpassung des Verstellweges.

In einer weiteren vorteilhaften Ausgestaltung der Erfindung ist das Mitnahmemittel der Exzenter jeweils durch eine sich im Wesentlichen radial erstreckende Zange gebildet, wobei das Eingriffsmittel zwei in radialer Richtung voneinander beabstandete und zwischen den Zangen der Exzenter angeordnete Strukturen umfasst. Bei dieser Ausgestaltung werden die Zangen durch das Kopplungselement aufeinander zugezogen, wodurch sich die Gesamtexzentrizität der beiden Exzenter vergrößert. Wird das Übertragungselement verdreht, so stützt sich zunächst die äußere Struktur gegen die in Drehrichtung befindliche Zange ab. Infolge der durch das Kopplungselement verursachten Gegenkraft wird das Übertragungselement verschoben, wodurch sich bei entsprechender Ausgestaltung die innenliegende Struktur entgegen der Drehrichtung gegen die weitere Zange bewegt. Hierdurch werden unabhängig von der Drehrichtung des Übertragungselements beide Zangen gegeneinander geöffnet, wodurch sich die Exzenter gegeneinander verdrehen.

Die Wirkung entgegen der Drehrichtung kann vorteilhafterweise erhöht werden, wenn die Zange zu der zentrumsnahen Struktur hin verdickt ist.

Zweckmäßigerweise laufen die Enden der Zangen aufeinander zu, wobei das Spiel zwischen dem Übertragungselement und den Zangen durch ein radial wirkendes Stellelement beseitigt ist.

Vorteilhafterweise weist das Übertragungselement für jede Zange einen Anschlag auf, wobei die Zangen jeweils zwischen den Strukturen und dem zugeordneten Anschlag angeordnet sind. Durch den Anschlag wird zum einen ein Überdrehen verhindert und zum anderen sichergestellt, dass über das Übertragungselement eine Verdrehung des Umlaufrads gegenüber dem Zentralrad bewirkt wird.

Die beschriebenen Strukturen können vielfältig ausgestaltet sein. So kann das Eingriffsmittel auf das jeweilige Mitnahmemittel durch Form-, Kraft- oder Reibschluss wirken. Auch ist neben einer mechanischen Kopplung auch eine magnetische oder elektrische Kopplung vorstellbar. Für einen Verstellbeschlag, der aus vergleichsweise wenigen mechanischen Elementen zusammengesetzt ist, ist es jedoch insbesondere sinnvoll, die Strukturen als Stifte auszuformen. Die Stifte selbst können hierbei aufgeklebt oder aufgeschraubt oder aus dem jeweiligen Element selbst herausgeformt sein.

Für die Betätigung des Verstellbeschlags ist es zweckmäßig, ein Antriebselement mit einem Mitnehmer zur Betätigung des Übertragungsmittels vorzusehen. Das Antriebselement kann dabei motorisch angetrieben oder aber ein einfaches Handrad sein. Im Falle der geschilderten Ausführungsform, in welcher die Mitnahmemittel als Zangen ausgebildet sind, ist es von Vorteil, wenn das Stellelement, welches das Übertragungselement gegen die Zangen drückt, sich an dem Mitnehmer abstützt.

Zur Ausbildung der Verschiebbarkeit ist es zweckmäßig, ein Langloch vorzusehen. Dabei braucht das Übertragungselement nicht zwangsläufig mit dem Langloch auf der Zentralachse gelagert sein. Dies ist insbesondere dann nicht sinnvoll, wenn sich das Übertragungselement gar nicht bis zur Zentralachse hin erstreckt.

Aus Kostengründen ist es vorteilhaft, wenn das Kopplungselement durch eine mechanische Feder gebildet ist.

Ausführungsbeispiele der Erfindung werden anhand einer Zeichnung näher erläutert. Dabei zeigen in teilweise perspektivischer Darstellung:
- Fig. 1: einen geöffneten Verstellbeschlag,
- Fig. 2: den Verstellbeschlag gemäß Fig. 1 mit eingesetzten Exzentern in einer Ruheposition,
- Fig. 3: den Verstellbeschlag gemäß Fig. 1 mit eingesetzten Exzentern in einer Betätigungsposition,
- Fig. 4: den Verstellbeschlag gemäß Fig. 1 mit detailliertem Blick auf die Exzenter,
- Fig. 5: einen Verstellbeschlag mit zangenförmigen Mitnahmemitteln der Exzenter und
- Fig. 6: eine alternative Ausgestaltung des Verstellbeschlags gemäß Fig. 5.

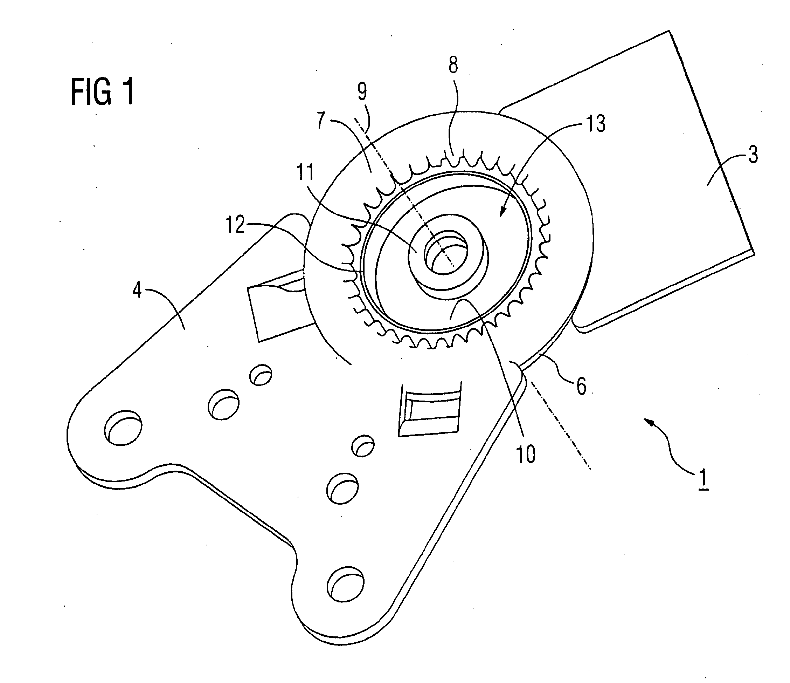

In Fig. 1 ist zur Erläuterung der Funktionsweise ein geöffneter Verstellbeschlag 1 dargestellt, der ein erstes Beschlagteil 3 und ein zweites Beschlagteil 4 umfasst, die über ein Taumelgetriebe drehverstellbar miteinander verbunden sind. Hierzu ist an dem ersten Beschlagteil 3 ein Zentralrad 6 angeordnet, welches eine nicht sichtbare Innenverzahnung aufweist, Das Zentralrad 6 bildet gewissermaßen eine topfförmige Struktur aus, in welche ein mit dem zweiten Beschlagteil 4 verbundenes Umlaufrad 7 eingesetzt ist. Hierzu weist das Umlaufrad 7 eine Außenverzahnung 8 auf, welche in die Innenverzahnung des Zentralrads 6 eingreift. Von der eingeprägten Außenverzahnung 8 ist die Rückseite sichtbar.

Der Durchmesser der Außenverzahnung 8 ist geringfügig kleiner als der Durchmesser der Innenverzahnung des Zentralrads 6. Hierdurch ist das Umlaufrad 7 bezüglich der Zentralachse 9 exzentrisch angeordnet. Das zweite Beschlagteil 4 führt daher bei einer Betätigung gegenüber dem ersten Beschlagteil 3 eine Taumelbewegung aus, wobei sich das Umlaufrad 7 mit wechselnder Drehachse entlang der Innenverzahnung des Zentralrads 6 abrollt.

Am Boden 10 des Zentralrads 6 ist zentral eine Hülse 11 angeordnet. Zusammen mit der umlaufenden Wandung 12 des Umlaufrads 7 bildet diese Hülse 11 einen exzentrischen Aufnahmeraum 13 aus. Bei einer Taumelbewegung des Umlaufrads 7 in dem Zentralrad 6 rotiert gewissermaßen die Exzentrizität des Aufnahmeraums 13 um die Zentralachse 9. Entsprechend den dargestellten Größenverhältnissen rotiert die Exzentrizität gegenüber der Relativdrehung von Umlaufrad 7 zu Zentralrad 6 mit einer etwa 35-fachen Übersetzung.

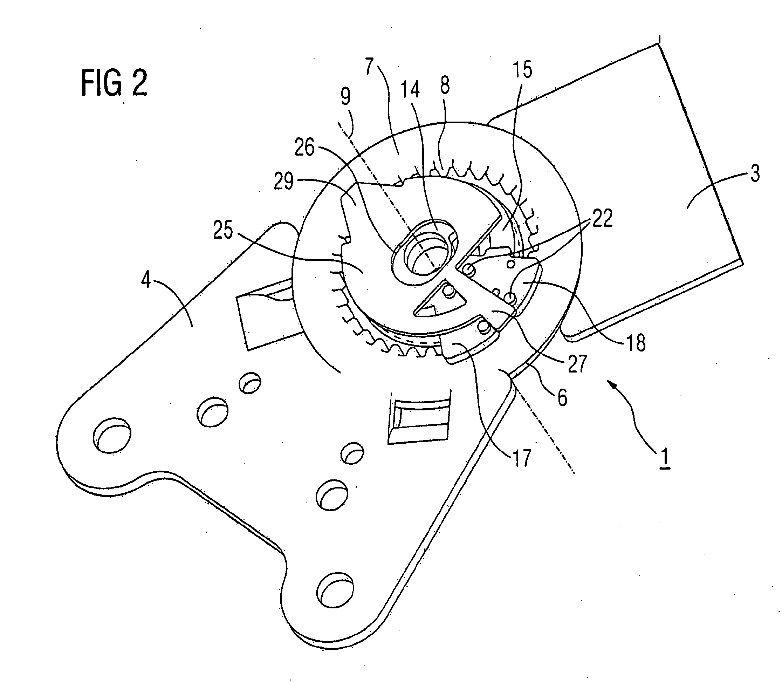

Fig. 2 zeigt den Verstellbeschlag 1 gemäß Fig. 1 mit in den Aufnahmeraum 13 eingesetzten Exzentern 14 und 15. Dabei ist der innere Exzenter 14 in einem äußeren Exzenter 15 eingesetzt. Beide Exzenter 14 und 15 füllen den Aufnahmeraum 13 aus.

An den inneren Exzenter 14 ist ein sich in radialer Richtung erstreckender erster Arm 17 angeordnet. Dieser befindet sich gegenüber einem spiegelsymmetrisch ausgebildeten zweiten Arm 18, der an dem außenliegenden zweiten Exzenter 15 angebracht ist. Werden erster Arm 17 und zweiter Arm 18 aufeinanderzubewegt, so vergrößert sich die Gesamtexzentrizität der beiden Exzenter 14 und 15. Umgekehrt verringert sich die Gesamtexzentrizität, wenn erster Arm 17 und zweiter Arm 18 auseinander bewegt werden. Dargestellt ist eine Ruheposition des Verstellbeschlags 1. Dabei sind der erste Arm 17 und der zweite Arm 18 durch ein hier nicht dargestelltes Kopplungselement aufeinander zu bewegt. Durch die hierdurch vergrößerte Gesamtexzentrizität greift das Umlaufrad 7 spielfrei in das Zentralrad 6 ein.

Sowohl auf dem ersten Arm 17 als auch auf dem zweiten Arm 18 sind radial voneinander beabstandet erste Strukturen 20 bzw. zweite Strukturen 22 jeweils in Form von Stiften angeordnet. Zur Betätigung des Verstellbeschlags 1 ist ein Übertragungselement 25 vorgesehen, welches den Exzentern 14 und 15 aufliegt. Das Übertragungselement 25 ist mittels eines Langloches 26 drehbar um die Zentralachse 9 gelagert. Das Übertragungselement 25 weist weiter ein als sich radial erstreckender Finger ausgebildetes Eingriffsmittel 27 auf, welches zwischen den ersten Strukturen 20 und den zweiten Strukturen 22 liegt. Gegenüber dem Eingriffsmittel 27 ist dem Übertragungselement 25 eine Kante 29 angeformt, die der Mitnahme durch ein Antriebselement, wie insbesondere einem Handrad dient.

Wird das Übertragungselement 25 durch Mitnahme der Kante 29 gedreht, so verkantet sich das Eingriffsmittel 27 unabhängig von der Drehrichtung zwischen einer äußeren und einer gegenüberliegenden inneren der Strukturen 20 bzw. 22. Diese Verkantung wird durch die Längsverschiebung des Übertragungselements 25 mittels des Langlochs 26 ermöglicht. Durch diese Bewegung öffnen sich der erste Arm 17 und der zweite Arm 18 gegeneinander, wodurch sich die Gesamtexzentrizität der Exzenter 14 und 15 verringert. Die Exzenter 14 und 15 können gemeinsam in dem Aufnahmeraum 13 verdreht werden, wodurch sich mit entsprechender Übersetzung das erste Beschlagteil 3 gegenüber dem zweiten Beschlagteil 4 oder umgekehrt verdreht.

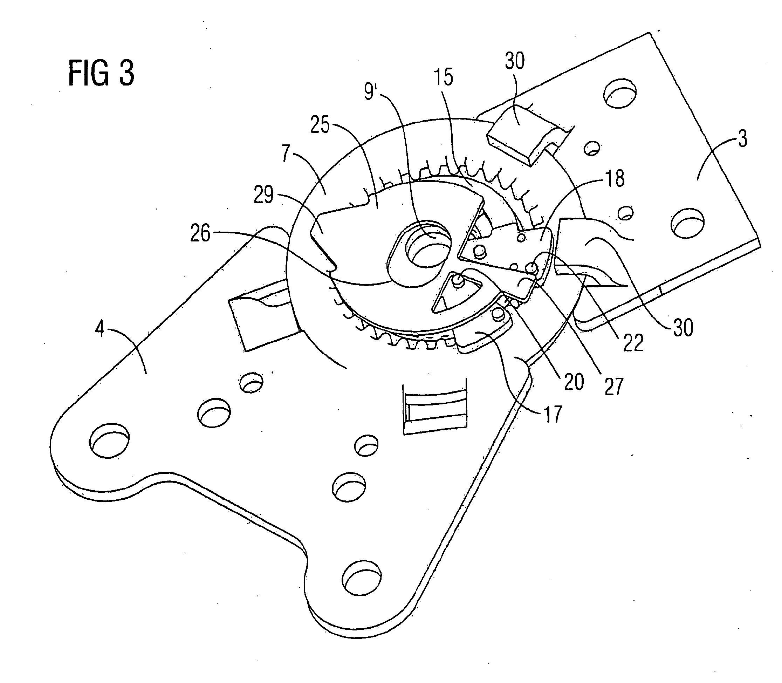

Zur Verdeutlichung der Bewegung des Übertragungselements 25 ist der Verstellbeschlag 1 in Fig. 3 in einer Betätigungsposition dargestellt. Man erkennt deutlich, dass sich das Übertragungselement 25 entgegen dem Uhrzeigersinn verdreht hat, wobei das Langloch 26 der Innenbohrung 9' anliegt, durch welche im eingebauten Zustand eine entsprechende Welle geführt ist. Der Finger des Eingriffsmittels 27 drückt die äußere der Strukturen 22 und die innere der Strukturen 20 auseinander, wodurch die Gesamtexzentrizität der Exzenter 14 und 15 verringert ist. Im Unterschied zu Fig. 2 sind für das erste Beschlagteil 3 zwei das Umlaufrad 7 übergreifende Übergriffe 30 eingezeichnet. In diesen Übergriffen 30 ist das Umlaufrad 7 eine Taumelbewegung zulassend geführt.

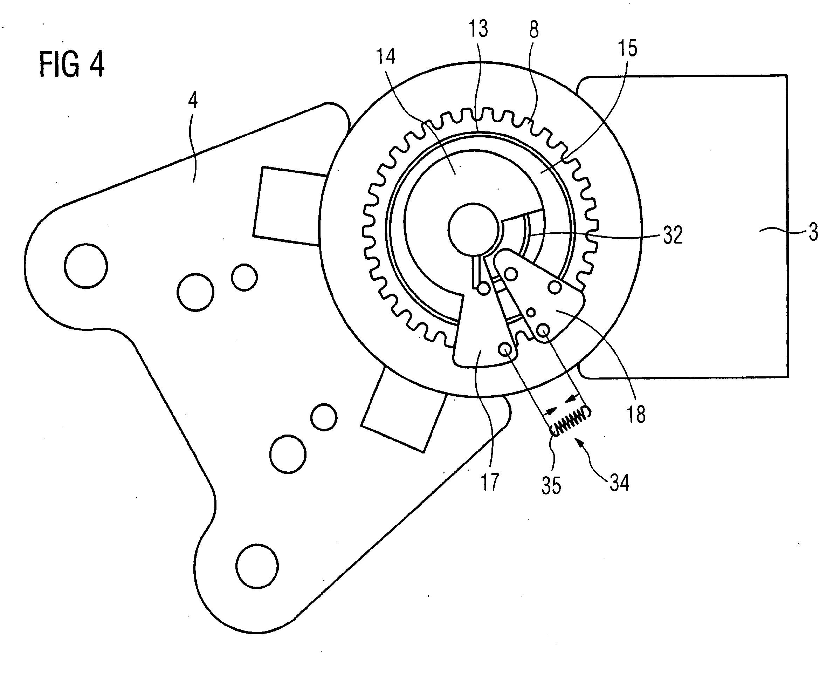

Fig. 4 zeigt zur Veranschaulichung eine Detailansicht des ersten Exzenters 14 und des zweiten Exzenters 15, die in dem Aufnahmeraum 13 angeordnet sind. Hierzu ist das Übertragungselement 25 nicht eingezeichnet.

Man erkennt, dass der erste Arm 17 den innenliegenden ersten Exzenter 14 und der zweite Arm 18 dem außen liegenden zweiten Exzenter 15 zugeordnet ist. Zur Ermöglichung einer Relativdrehung der beiden Exzenter 14 und 15 gegeneinander weist der innen liegende erste Exzenter 14 eine Ausnehmung 32 auf, in welcher ein nach innen verlängertes Teilstück des zweiten Arms 18 drehbar ist. Zur Verdeutlichung ist weiter symbolisch das Kopplungselement 34 dargestellt, welches eine mechanische Feder 35 umfasst, die den ersten Arm 17 und den zweiten Arm 18 aufeinander zu bewegt.

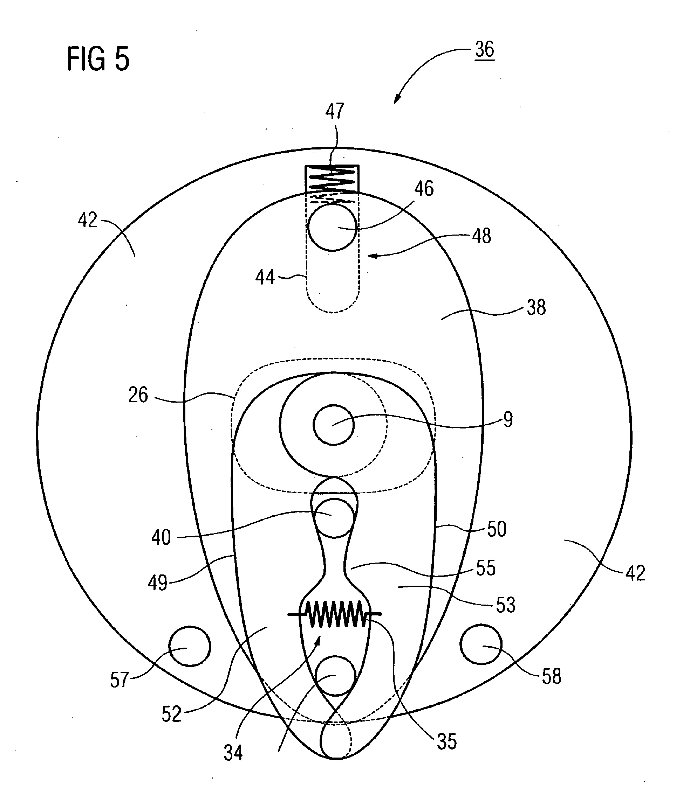

In Fig. 5 ist schematisch ein weiterer Verstellbeschlag 36 in einer Aufsicht dargestellt. Man erkennt entsprechend dem Vorgesagten ein Übertragungselement 38, welches als Eingriffsmittel Mitnahmestrukturen 39 und 40 umfasst. Das Übertragungselement 38 ist mittels eines Langlochs 26 um die Zentralachse 9 drehbar und längsverschiebbar gelagert. Zum Antrieb des Übertragungselements 38 ist ein Antriebselement 42 vorgesehen, welches einen als Langloch ausgebildeten Mitnehmer 44 aufweist, in welchem eine mit dem Übertragungselement 38 verbundene Struktur 46 geführt ist. Diese Struktur 46 stützt sich mittels einer Feder 47 in dem Mitnehmer 44 ab, wodurch insgesamt ein Stellelement 48 gebildet wird, welches das Übertagungselement 38 gemäß Fig. 5 nach unten drückt.

Die nicht sichtbaren Exzentrizitäten weisen ein zentral angreifendes erstes bzw. zweites Mitnahmemittel 49 bzw. 50 auf, die jeweils als eine erste Zange 52 bzw. als eine zweite Zange 53 ausgebildet sind. Dabei sind die Zangen 52 bzw. 53 nach außen aufeinander zulaufend gekrümmt und werden mittels einer Feder 35, die ein Kopplungselement 34 bildet, aufeinander zu gezogen. Werden die erste Zange 52 und die zweite Zange 53 gegeneinander geöffnet, so verringert sich die Gesamtexzentrizität der Exzenter. Im gezeigten Fall ist eine Ruheposition dargestellt, in der die Gesamtexzentrizität vergrößert ist.

Wird das Antriebselement 42 beispielsweise entgegen dem Uhrzeigersinn gedreht, so bewegt sich die Struktur 39 gegen die zweite Zange 53. Aufgrund der durch die Feder 35 resultierenden Gegenkraft wird dabei das Übertragungselement 38 bezüglich der Zentralachse 9 durch das Langloch 26 nach links verschoben. Durch die resultierende Kippbewegung drückt die Struktur 40 schließlich gegen die erste Zange 52, die an dieser Stelle eine Verdickung 55 aufweist. Im Endeffekt werden hierdurch beide Zangen 52 und 53 gegeneinander geöffnet, wodurch sich die Gesamtexzentrizität der Exzenter verringert, so dass das Übertragungselement 38 und damit der Verstellbeschlag 36 insgesamt betätigt werden kann.

Zusätzlich weist das Antriebselement 42 Anschläge 57 und 58 auf, die zur Mitnahme des Übertragungselements 38 vorgesehen sind.

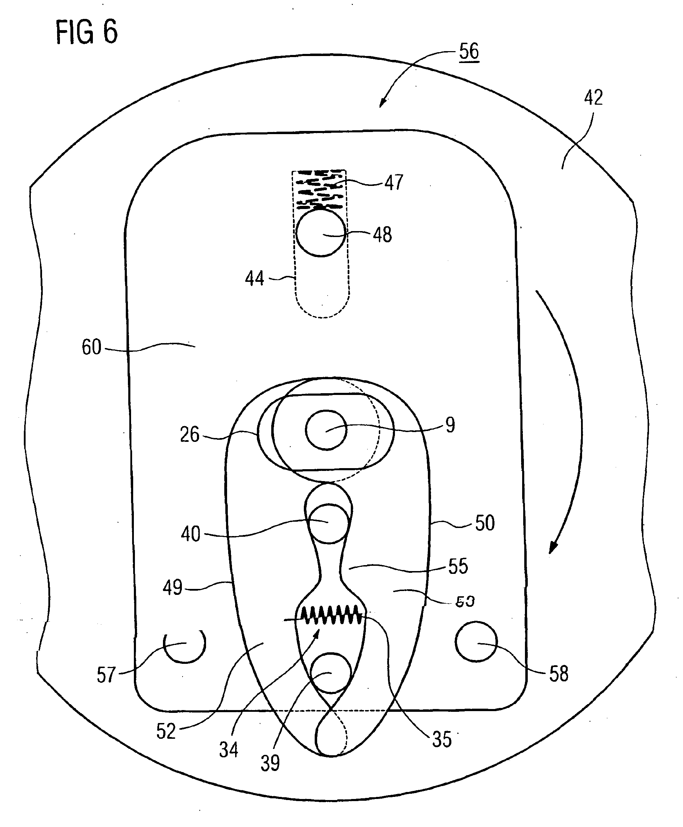

In Fig. 6 ist schematisch in einer Aufsicht ein weiterer Verstellbeschlag 56 dargestellt. Der Verstellbeschlag 56 unterscheidet sich von dem in Fig. 5 dargestellten Verstellbeschlag 36 durch eine andere Ausführung des Übertragungselements 60.

In diesem Fall sind die Anschläge 57 und 58 nicht dem Antriebselement 42 sondern dem Übertragungselement 60 zugeordnet. Das Übertragungselement 60 wird alleine über den Mitnehmer 44 angetrieben. Auch in dem dargestellten Fall öffnen sich bei Verdrehung des Übertragungselements 60 die beiden Zangen 52 und 53 gegeneinander so weit, bis sie an dem jeweiligen Anschlag 57 bzw. 58 anliegen. Auch über diese Anschläge 57 bzw. 58 erfolgt eine Verdrehung der Exzenter.

### Bezugszeichenliste

- 1: Verstellbeschlag
- 3: erstes Beschlagteil
- 4: zweites Beschlagteil
- 6: Zentralrad
- 7: Umlaufrad
- 8: Außenverzahnung
- 9: Zentralachse
- 9': Innenbohrung
- 10: Boden
- 11: Hülse
- 12: Wandung
- 13: Aufnahmeraum
- 14: erster Exzenter
- 15: zweiter Exzenter
- 17: erster Arm
- 18: zweiter Arm
- 20: erste Strukturen
- 22: zweite Strukturen
- 25: Übertragungselement
- 26: Langloch
- 27: Eingriffsmittel
- 29: Kante
- 30: Übergriff
- 32: Ausnehmung
- 34: Kopplungselement
- 35: Feder
- 36: Verstellbeschlag
- 38: Übertragungselement
- 39: Struktur
- 40: Struktur
- 42: Antriebselement
- 44: Mitnehmer
- 46: Struktur
- 47: Feder
- 48: Stellelement
- 49: erstes Mitnahmemittel
- 50: zweites Mitnahmemittel
- 52: erste Zange
- 53: zweite Zange
- 55: Verdickung
- 57: erster Anschlag
- 56: Verstellbeschlag
- 58: zweiter Anschlag
- 60: Übertragungselement

## Patentansprüche

1. Verstellbeschlag (1,36,56), insbesondere für einen Fahrzeugsitz, mit einem ersten Beschlagteil (3) und einem zweiten Beschlagteil (4), die über ein Taumelgetriebe drehverstellbar miteinander verbunden sind, wobei das Taumelgetriebe ein um eine Zentralachse (9) drehbares mit dem ersten Beschlagteil (3) verbundenes Zentralrad (6) und ein zur Zentralachse (9) exzentrisch im Inneren des Zentralrads (6) angeordnetes, mit dem zweiten Beschlagteil (4) verbundenes Umlaufrad (7) umfasst, wobei das Zentralrad (6) und das Umlaufrad (7) zueinander einen exzentrischen Aufnahmeraum (13) bilden, in dem ein erster (14) und ein zweiter Exzenter (15) gegeneinander verdrehbar, hierdurch eine variable Exzentrizität bildend, angeordnet sind, und wobei ein Kopplungselement (34) vorgesehen ist, welches den ersten und den zweiten Exzenter (14,15) zueinander in eine Position mit vergrößerter Gesamtexzentrizität bringt, in welcher das Umlaufrad (7) spielfrei in das Zentralrad (6) eingreift, und mit einem ein Eingriffsmittel (27) aufweisendes, um die Zentralachse (9) drehbares Übertragungselement (25,38,60) zur Betätigung der Exzenter (14,15), wobei die Exzenter (14,15) jeweils ein Mitnahmemittel (49,50) aufweisen, mit welchem das Eingriffsmittel (27) zusammenwirkt,
**dadurch gekennzeichnet,**
**dass** das Übertragungselement (25,38,60) zusätzlich in der Ebene der Beschlagteile beweglich gelagert ist, wobei sich das Eingriffsmittel (27) im Wesentlichen in dieser Ebene erstreckt und bei Betätigung auf beide Mitnahmemittel (49,50) entgegen dem Kopplungselement (34) wirkt, wodurch die Exzenter (14,15) in eine Position mit verringerter Gesamtexzentrizität bringbar sind, in welcher das Umlaufrad (7) mit Spiel in das Zentralrad (6) eingreift.

2. Verstellbeschlag (1,36,56) nach Anspruch 1,
**dadurch gekennzeichnet,**
**dass** das Eingriffsmittel (27) als ein sich radial erstreckender Zeiger ausgebildet ist, und dass das Mitnahmemittel (49,50) der Exzenter (14,15) jeweils durch zwei jeweils auf einer Seite des Zeigers angeordnete Strukturen (20,22) gebildet ist.

3. Verstellbeschlag (1,36,56) nach Anspruch 1 oder 2,
**dadurch gekennzeichnet,**
**dass** die Exzenter (14,15) jeweils einen sich radial über den Umfang hinaus erstreckenden Arm (17,18) aufweisen, auf welchem jeweils das Mitnahmemittel (49,50) angeordnet ist.

4. Verstellbeschlag (1,36,56) nach Anspruch 1,
**dadurch gekennzeichnet,**
**dass** das Mitnahmemittel (49,50) der Exzenter (14,15) jeweils durch eine sich im Wesentlichen radial erstreckende Zange (52,53) gebildet ist, und dass das Eingriffsmittel (27) zwei in radialer Richtung voneinander beabstandete und zwischen den Zangen (52,53) der Exzenter (14,15) angeordnete Strukturen (39,40) umfasst.

5. Verstellbeschlag (1,36,56) nach Anspruch 4,
**dadurch gekennzeichnet,**
**dass** die Zange (52) zu der zentrumsnahen Struktur (40) hin verdickt ist.

6. Verstellbeschlag (1,36,56) nach Anspruch 4 oder 5,
**dadurch gekennzeichnet,**
**dass** die Enden der Zangen (52,53) aufeinander zulaufen und dass ein radial wirkendes Stellelement (48) zur Beseitigung des Spiels zwischen dem Übertragungselement (38,60) und den Zangen (52,53) vorgesehen ist.

7. Verstellbeschlag (1,36,56) nach einem der Ansprüche 4 bis 6,
**dadurch gekennzeichnet,**
**dass** das Übertragungselement (38,60) für jede Zange (52,53) einen Anschlag (57,58) aufweist, wobei die Zangen (52,53) jeweils zwischen den Strukturen (39,40) und dem zugeordneten Anschlag angeordnet sind.

8. Verstellbeschlag (1,36,56) nach einem der vorhergehenden Ansprüche,
**dadurch gekennzeichnet,**
**dass** die Strukturen (20,22,39,40,46) als Stifte ausgeformt sind.

9. Verstellbeschlag (1,36,56) nach einem der vorhergehenden Ansprüche,
**dadurch gekennzeichnet,**
**dass** ein Antriebselement (42) mit einem Mitnehmer (44) zur Betätigung des Übertragungselements (25,38,60) vorgesehen ist.

10. Verstellbeschlag (1,36,56) nach Anspruch 9 und 6,
**dadurch gekennzeichnet,**
**dass** sich an dem Mitnehmer (44) das Stellelement (48) abstützt.

11. Verstellbeschlag (1,36,56) nach einem der vorhergehenden Ansprüche,
**dadurch gekennzeichnet,**
**dass** zur Ausbildung der Verschiebbarkeit das Übertragungselement (25,38,60) ein Langloch (26) aufweist.

12. Verstellbeschlag (1,36,56) nach einem der vorhergehenden Ansprüche,
**dadurch gekennzeichnet,**
**dass** das Kopplungselement (34) durch eine mechanische Feder (35) gebildet ist.

## Claims

1. Adjustment fitting (1, 36, 56), in particular for a vehicle seat, comprising a first fitting part (3) and a second fitting part (4), which are connected to each other in a rotationally adjustable manner via a wobble mechanism, wherein the wobble mechanism comprises a central wheel (6) rotatably connected to the first fitting part (3) around a central axle (9) and a revolving wheel (7) connected to the second fitting part (4) arranged inside the central wheel (6) eccentrically to the central axle (9), the central wheel (6) and the revolving wheel (7), eccentric to one another, forming a receiving space (13), in which a first (14) and a second eccentric (15) are rotatably arranged against each other, thereby forming variable eccentricity, and wherein a coupling element (34) is provided, which brings the first and the second eccentrics (14, 15) together into a position with increased total eccentricity, in which the revolving wheel (7) engages without play into the central wheel (6), and with a transmission element (25, 38, 60) having an engagement means (27) rotating around the central axle (9) for operating the eccentrics (14, 15), wherein the eccentrics (14, 15) have a pushing means (49, 50), with which the engagement means (27) cooperates, **characterized in that** the transmission element (25, 38, 60) is additionally movably mounted in the plane of the fitting parts, wherein the engagement means (27) substantially extends in this plane and, when operated, acts on both pushing means (49, 50) against the coupling element (34), as a result of which the eccentrics (14,15) can be brought into a position with reduced total eccentricity, in which the revolving wheel (7) engages with play into the central wheel (6).

2. Adjustment fitting (1, 36, 56) according to Claim 1, **characterized in that** the engagement means (27) is designed as a radially extending indicator, and the pushing means (49, 50) of the eccentrics (14, 15) is in each case formed by two structures (20, 22), arranged in each case on a side of the indicator.

3. Adjustment fitting (1, 36, 56) according to Claim 1 or 2, **characterized in that** the eccentrics (14, 15) each have an arm (17, 18) radially extending beyond the periphery, on which the pushing means (49, 50) is arranged in each case.

4. Adjustment fitting (1, 36, 56) according to Claim 1, **characterized in that** the pushing means (49, 50) of the eccentrics (14, 15) is in each case formed by a pincer (52, 53) extending substantially radially, and **in that** the engagement means (27) comprises two structures (39, 40) at a distance from one another in the radial direction and arranged between the pincers (52, 53) of the eccentrics (14, 15).

5. Adjustment fitting (1, 36, 56) according to Claim 4, **characterized in that** the pincer (52) is thickened towards the near-centre structure (40).

6. Adjustment fitting (1, 36, 56) according to Claim 4 or 5, **characterized in that** the ends of the pincers (52, 53) merge with one another, and **in that** a radially working actuator (48) is provided for eliminating the play between the transmission element (38, 60) and the pincers (52, 53).

7. Adjustment fitting (1, 36, 56) according to any one of Claims 4 to 6, **characterized in that** the transmission element (38, 60), for each pincer (52, 53), has a stop (57, 58), wherein the pincers (52, 53) are each arranged between the structures (39, 40) and the associated stop.

8. Adjustment fitting (1, 36, 56) according to any one of the preceding claims, **characterized in that** the structures (20, 22, 39, 40, 46) are configured as pins.

9. Adjustment fitting (1, 36, 56) according to any one of the preceding claims, **characterized in that** a drive component (42) is provided with a pusher (44) for operating the transmission element (25, 38, 60).

10. Adjustment fitting (1, 36, 56) according to Claim 9 and 6, **characterized in that** the actuator (48) rests on the pusher (44).

11. Adjustment fitting (1, 36, 56) according to any one of the preceding claims, **characterized in that** the transmission element (25, 38, 60) has an elongated hole (26) for providing the moveability.

12. Adjustment fitting (1, 36, 56) according to any one of the preceding claims, **characterized in that** the coupling element (34) is formed by a mechanical spring (35).

## Revendications

1. Ferrure de réglage (1, 36, 56), notamment pour un siège de véhicule, comprenant une première pièce de ferrure (3) et une deuxième pièce de ferrure (4), qui sont reliées l'une à l'autre de manière réglable en rotation par un système de transmission à oscillation, le système de transmission à oscillation comportant une roue centrale (6) liée à la première pièce de ferrure (3) et pouvant tourner autour d'un axe central (9), et une roue planétaire (7) liée à la deuxième pièce de ferrure (4) et agencée à l'intérieur de la roue centrale (6) de manière excentrique par rapport à l'axe central (9), la roue centrale (6) et la roue planétaire (7) formant l'une par rapport à l'autre une chambre de réception (13) excentrique, dans laquelle sont agencés un premier (14) et un deuxième excentrique (15) rotatifs l'un par rapport à l'autre en réalisant ainsi une excentricité variable, et dans l'ensemble est prévu un élément de couplage (34) qui amène le premier et le deuxième excentrique (14, 15) dans une position relative réciproque d'excentricité globale accrue, dans laquelle la roue planétaire (7) s'engage sans jeu dans la roue centrale (6), ainsi qu'un élément de transmission (25, 38, 60) qui présente un moyen d'action (27), peut tourner autour de l'axe central (9) et est destiné à l'actionnement des excentriques (14, 15), les excentriques (14, 15) présentant chacun un moyen entraîneur (49, 50) avec lequel interagit le moyen d'action (27),
**caractérisée en ce que** l'élément de transmission (25, 38, 60) est en supplément monté de manière mobile dans le plan des pièces de ferrure, le moyen d'action (27) s'étendant essentiellement dans ce plan et, en cas d'actionnement, agit sur les deux moyens entraîneurs (49, 50) à l'encontre de l'élément de couplage (34), ce qui permet d'amener les excentriques (14, 15) dans une position d'excentricité globale réduite, dans laquelle la roue planétaire (7) s'engage avec jeu dans la roue centrale (6).

2. Ferrure de réglage (1, 36, 56) selon la revendication 1,
**caractérisée en ce que** le moyen d'action (27) est réalisé sous la forme d'un index s'étendant radialement, et **en ce que** le moyen entraîneur (49, 50) des excentriques (14, 15) est formé respectivement par deux structures (20, 22) agencées respectivement sur un côté de l'index.

3. Ferrure de réglage (1, 36, 56) selon la revendication 1 ou 2,
**caractérisée en ce que** les excentriques (14, 15) présentent chacun un bras (17, 18) s'étendant radialement au-delà de la périphérie, et sur lequel est agencé le moyen entraîneur (49, 50) respectif.

4. Ferrure de réglage (1, 36, 56) selon la revendication 1,
**caractérisée en ce que** le moyen entraîneur (49, 50) des excentriques (14, 15) est formé pour chacun par une pince (52, 53) respective, qui s'étend sensiblement de manière radiale, et **en ce que** le moyen d'action (27) comprend deux structures (39, 40) espacées l'une de l'autre dans la direction radiale et agencées entre les pinces (52, 53) des excentriques (14, 15).

5. Ferrure de réglage (1, 36, 56) selon la revendication 4,
**caractérisée en ce que** la pince (52) est d'une épaisseur augmentée en direction de la structure (40) proche du centre.

6. Ferrure de réglage (1, 36, 56) selon la revendication 4 ou 5,
**caractérisée en ce que** les extrémités des pinces (52, 53) s'étendent l'une en direction de l'autre, et **en ce qu'**il est prévu un élément actionneur (48) agissant radialement pour éliminer le jeu entre l'élément de transmission (38, 60) et les pinces (52, 53).

7. Ferrure de réglage (1, 36, 56) selon l'une des revendications 4 à 6,
**caractérisée en ce que** l'élément de transmission (38, 60) présente pour chaque pince (52, 53) une butée (57, 58), les pinces (52, 53) étant agencées respectivement entre les structure s(39, 40) et la butée associée.

8. Ferrure de réglage (1, 36, 56) selon l'une des revendications précédentes,
**caractérisée en ce que** les structures (20, 22, 39, 40, 46) sont réalisées sous forme de chevilles.

9. Ferrure de réglage (1, 36, 56) selon l'une des revendications précédentes,
**caractérisée en ce qu'**il est prévu un élément d'entraînement (42) avec un entraîneur (44) pour l'actionnement de l'élément de transmission (25, 38, 60).

10. Ferrure de réglage (1, 36, 56) selon les revendications 9 et 6,
**caractérisée en ce que** sur l'entraîneur (44) s'appuie l'élément actionneur (48).

11. Ferrure de réglage (1, 36, 56) selon l'une des revendications précédentes,
**caractérisée en ce que** pour réaliser la possibilité de coulissement, l'élément de transmission (25, 38, 60) présente un trou oblong (26).

12. Ferrure de réglage (1, 36, 56) selon l'une des revendications précédentes,
**caractérisée en ce que** l'élément de couplage (34) est formé par un ressort mécanique (35).
